# EUROPEAN PATENT SPECIFICATION

(11) **EP 2 697 400 B1**
(45) Date of publication and mention of the grant of the patent: **08.07.2020**
(21) Application number: 12715841.8
(22) Date of filing: 13.04.2012
(51) Int. Cl.: C21D 1/673, C21D 7/13, C21D 8/02, C23C 2/06, C23C 2/26, C23C 22/18, C25D 11/36, C23C 28/00, C23C 22/07, C23C 22/08

(54) **HOT FORMED PRODUCT, PROCESS FOR THE PRODUCTION OF HOT FORMABLE STRIP, SHEET OR BLANK AND METHOD FOR HOT FORMING**
WARMGEFORMTES PRODUKT, VERFAHREN ZUR HERSTELLUNG EINES WARMFORMBARES BAND, BLECH ODER ROHLING UND VERFAHREN ZUM WARMFORMEN
PRODUIT FORMÉ À CHAUD, PROCÉDÉ DE PRODUCTION DES FEUILLARD, TÔLE OU ÉBAUCHE APTE AU FORMAGE À CHAUD ET PROCÉDÉ DE FORMAGE À CHAUD

(30) Priority: 13.04.2011 EP 11003122; 09.06.2011 EP 11004706; 07.10.2011 EP 11008129
(43) Date of publication of application: 19.02.2014
(73) Proprietor: Tata Steel IJmuiden B.V., NL-1951 JZ VELSEN-NOORD (NL)
(72) Inventor: BLEEKER, Robert, NL-1970 CA Ijmuiden (NL); VERLOOP, Willem Cornelis, NL-1970 CA Ijmuiden (NL); HENSEN, Guido Cornelis, NL-1970 CA Ijmuiden (NL)
(74) Representative: Group Intellectual Property Services
(86) International application number: PCT/EP2012/001611
(87) International publication number: WO 2012/139770

(56) References cited:
- EP-A1- 2 088 223
- DE-A1-102009 007 909
- JP-A- H07 138 764
- US-A- 4 497 668
- US-A- 5 516 372
- FADERL J ET AL: "GALVANNEALED-FEINBLECH: ERGEBNISSE AUS 10 JAHREN PRODUKT- UND PROZESSOPTIMIERUNG//GALVANNEALED STEEL SHEET: 10 YEARS OF EXPERIENCE IN PRODUCT AND PROCESS IMPROVEMENT", STAHL UND EISEN, VERLAG STAHLEISEN, DUSSELDORF, DE, vol. 121, no. 10, 15 October 2001 (2001-10-15), pages 73-79, XP001092595, ISSN: 0340-4803

## Description

The invention relates to a hot formed product made from a hot formable strip, sheet or blank which is formable at a temperature of 600° C or above, comprising a substrate of hot formable steel coated with a corrosion protective coating. The invention also relates to a process for producing such a strip, sheet or blank, and to a method for hot forming a product.

Such a coated strip, sheet or blank is known from WO2010/089273A1 according to which a flat steel product produced from an alloyed heat-treatable steel as known from e.g. EP0971044 is coated with an Al coating, which flat steel product provided with the Al coating is coated with a Zn coating, which flat steel product provided with the Al coating and the Zn coating is coated with a surface layer the main component of which is at least one metallic salt of phosphoric acid or diphosphoric acid wherein the metal is from the group of metals formed by Cu, Mo, Fe, Mn, Sb, Zn, Ti, Ni, Co, V, Mg, Bi, Be, Al, Ce, Ba, Sr, Na, K, Ge, Ga, Ca, Cr, Tn, Sn, in particular Zn, Al, Ni, Mn, Mg, Bi, Cu, Si, Mo, more in particular Zn, Fe, Mn, Ni, Mo, Mg and which can additionally contain contents of up to 45 % of an AI:Zn proportion, wherein Al occupies 0.1 - 99.9 wt % of said proportion and Zn occupies the rest, or compounds of Al and Zn and optionally metal oxides, metal hydroxides, and/or sulfur compounds.

EP2088223A1 relates to a phosphate coated strip that has improved corrosion protection and can be deformed e.g. in deep-drawing operations with high degrees of deformation. This document is silent about hot forming.

US5516372 relates to a process for phosphating a galvanized surface of a steel strip electrolytically galvanized on one side wherein the ungalvanized surface remains metal bright. This document is silent about hot forming.

JP19930282570 relates to a zinc containing metal plated steel article for high speed pressing. This document is silent about hot forming.

It is an object of the invention to provide a coated strip, sheet or blank suitable for hot forming that has a good spot weldability after hot forming.

It is a further object of the invention to provide a coated strip, sheet or blank suitable for hot forming that is economical to produce.

It is also an object of the invention to provide a process for the production of a strip, sheet or blank that meets one or more of the objects hereinabove.

It is furthermore an object of the invention to provide a method for hot forming a product and a hot formed product that has a good spot weldability.

According to the invention one or more of the above objects are reached with a hot formed product according to claim 1.

The inventors have found that such a metal-phosphate layer is very suitable to greatly reduce the extent of oxidation during the hot forming of a steel strip, sheet and blank coated with a corrosion protective coating. The metal-phosphate layer also reduces zinc losses due to evaporation. When hot formed, the phosphated material has a low contact resistance and consequently good weldability. Because of the reduced oxidation of the corrosion protective coating, the metal-phosphate layer also improves the effectiveness of the coating for corrosion protection of the steel.

The metal-phosphate layer contains the element zinc, wherein the element zinc in the metal-phosphate layer has a share of at least 20 % in the metallic elements in the metal-phosphate layer, preferably a share of at least 50 %, more preferably at least 80 %. The zinc-phosphate layer thus adds to the protection of the steel. For the avoidance of doubt it is stated here that the term "share in" denotes the weight of the respective metallic element divided by the total weight of the metallic elements, the result being expressed as a percentage.

Preferably, the metal-phosphate layer is formed using a ZnMn phosphate. This phosphate layer has shown to provide a good spot weldability for the hot formed product.

In an embodiment, the metal-phosphate layer is formed using a ZnNiMn phosphate. This phosphate layer has shown to provide a good spot weldability for the hot formed product.

The metal-phosphate layer contains the element calcium. Calcium will be available as a separate metal phosphate layer whereby the metal is both zinc and calcium together with ZnNiMn phosphate as a base metal-phosphate, but also with other metal-phosphates such as Zn and ZnMn. After hot forming, calcium is enriched present in the coating directly underneath the zinc oxide layer. This presence probably additionally contributes to a reduction of the zinc oxide formation next to the zinc reduction caused by the metal-phosphate itself, which improves the weldability.

According to a preferred embodiment, the thickness of the metal-phosphate layer is at most 5 g/m² , preferably between 0.1 and 3.0 g/m², more preferably between 0.2 and 2.5 g/m², more preferably between 1.0 and 2.5 g/m². The inventors have found that the thickness of the metal-phosphate layer should be at most 5 g/m² since with higher thickness the metal-phosphate layer will itself hamper the contact resistance and spot weldability of the material. Thinner layers as preferred give satisfactory results, while only limited amounts of metal-phosphate needs to be used.

The corrosion protective coating is a zinc or zinc alloy layer. A coating of zinc or a zinc alloy gives a very good, active corrosion protection of the steel substrate.

According to a preferred embodiment the zinc or zinc alloy layer is a galvannealed layer containing Fe up to 70 weight %, preferably containing Fe up to 40 weight %, more preferably containing Fe up to 20 weight %, still more preferably containing Fe up to 10 weight %. Using a galvannealed zinc or zinc alloy layer makes it easier to hot form the coated steel. A high amount of iron in the coating can result in a brittle layer with a rough surface texture and possibly poor coverage after processing in the galvanizing line. In order to have a fully covered surface with phosphate, the iron concentration can be minimized to offer a smooth surface after galvanizing and prior to application of the phosphate.

According to another preferred embodiment the zinc alloy layer consists of 0.3 to 2.3 weight % magnesium and 0.6 to 2.3 weight % aluminium, optionally less than 0.2 weight % of one or more additional elements, the remainder being zinc and unavoidable impurities. An optional element that could be added in a small amount, less than 0.2 weight %, could be Pb or Sb, Ti, Ca, Mn, Sn, La, Ce, Cr, Ni, Zr or Bi. Pb, Sn, Bi and Sb are usually added to form spangles. It has been found that a metal-phosphate layer as mentioned above on this type of coating gives a very good spot weldability.

Preferably the corrosion protective coating has a thickness of 2 to 25 µm. These thicknesses are suitable to produce hot formed parts for automotive purposes.

The hot formable steel substrate is a steel substrate, having a composition in weight percent:
C between 0.04 and 0.5 %
Mn between 0.5 and 3.5 %
Si less than 2.0 %
Cr less than 1.0 %
Ti less than 0.2 %
Al less than 2.0 %
Mo less than 0.5 %
P less than 0.1 %
N less than 0.015 %
S less than 0.05 %
B less than 0.015 %
the remainder being Fe and unavoidable impurities.

These steel types are suitable for hot forming, wherein the alloying elements can still be chosen within limits. Usually the amount of boron is between 0.001 and 0.005 weight %.

According to a preferred embodiment the hot formable steel substrate is a steel substrate, having a composition in weight percent:
C between 0.04 and 0.5 %
Mn between 0.5 and 3.5 %
Si less than 2.0 %
Cr less than 1.0 %
Ti less than 0.2 %
Al less than 2.0 %
Mo less than 0.5 %
P less than 0.1 %
Nb less than 0.1 %
N less than 0.015 %
S less than 0.05 %
B less than 0.015 %
the remainder being Fe and unavoidable impurities.

These steel types have better mechanical properties when Nb is added. Also in this embodiment the amount of boron is usually between 0.001 and 0.005 weight %. According to another preferred embodiment the hot formable steel substrate is a steel substrate, having a composition in weight percent:
C between 0.04 and 0.5 %
Mn between 0.5 and 3.5 %
Si less than 2.0 %
Cr less than 1.0 %
Ti less than 0.2 %
Al less than 2.0 %
Mo less than 0.5 %
P less than 0.1 %
N less than 0.015 %
S less than 0.05 %
B less than 0.015 %
W less than 0.3 %
the remainder being Fe and unavoidable impurities.

These steel types have better mechanical properties when W is added. Also in this embodiment the amount of boron is usually between 0.001 and 0.005 weight %.

Preferably the steel substrate has a thickness between 0.5 and 3.0 mm. Such thicknesses are used in the automotive industry.

According to a preferred embodiment the steel substrate is hot formable at Ac1-temperature or above. Such steel substrates can be used for hot forming and quenching of the hot formed product, which usually provides a tensile strength of 1500 MPa or more.

The invention also relates to a process for producing the hot formable strip, sheet or blank as described above, wherein the substrate of hot formable steel coated with the corrosion protective coating being a Zn or Zn alloy layer is covered with a metal-phosphate solution containing the element zinc and calcium and optionally at least one element of manganese and nickel, whereafter the strip, sheet or blank is heated to remove any excess of water and complete the formation of the metal-phosphate layer. In this way it is possible to provide the steel substrate with the metal-phosphate layer as exemplified above.

According to a preferred embodiment the metal-phosphate solution is applied on the coated steel strip, sheet or blank as a wet film having a thickness of 1 to 10 ml/m² by spraying or dipping and subsequently squeezing or by roll coating or by rinsing optionally followed by gas wiping, preferably at the end of a coating line, and the wet film is dried at a temperature of between 70°C and 90°C. This process of applying the wet film is easy to perform and gives an even wet layer on the coated substrate, which is dried or further dried in the usual manner, for instance in an oven.

The invention moreover relates to a method for hot forming the sheet or blank as described above, wherein the sheet or blank or a pre-form formed out of the sheet or blank is heated to the Ac1-temperature or above, the sheet or blank or pre-form is hot formed in a hot forming die, and the hot formed product is quenched. This is the usual hot forming process, which is now performed using a sheet or blank according to the invention or a sheet, blank or preform produced from the strip, sheet or blank according to the invention. Using such a preform, blank or sheet with a metal-phosphate layer according to the invention, the product formed has a good weldability.

The invention furthermore relates to the hot formed product, wherein the coated hot formed substrate has a contact resistance below 1 mOhm.

The hot formed product may have the corrosion protective coating containing P. The inventors have found that during hot forming some P diffuses from the metal-phosphate layer into the corrosion protective coating.

According to a preferred embodiment the composition of the steel substrate of the hot formed product is essentially the same as the composition of the steel substrate before the hot forming. The inventors have found that the metal-phosphate layer reduced the diffusion of the alloying elements from the substrate into the corrosion protective coating. This also holds for B and Mn present in the substrate, resulting in a better hardenability of the substrate, and thus in a resulting product having a higher hardness compared to the situation when no metal-phosphate is present.

The invention will be elucidated referring to some background information and a number of experiments hereinafter, shown in the accompanying figures.
Fig. 1A shows a cross-section of a zinc-coated substrate without phosphate layer after heating.
Fig. 1B shows a cross-section of a zinc-coated substrate provided with a phosphate layer after heating.
Fig. 2 shows the amount of zinc-oxide on substrates with and without a phosphate layer after heating.
Fig. 3 shows the amount of zinc on substrates with and without a phosphate layer after heating.
Fig. 4 shows the elements O, P, Ni, Mn and Ca in the coating after hot forming.
Fig. 5 shows the elements B and Mn in the coating after hot forming without phosphate layer, with a ZnMg phosphate layer and with a ZnNiMg phosphate layer.

Due to the high temperatures during hot forming, zinc coated material oxidises rapidly. Due to the nature of the formed oxide, the contact resistance of the material will increase. In general, a hot formed material with a contact resistance larger than 1 mOhm is regarded as unweldable. After a commonly used heat treatment of 6 minutes in a furnace of 900 °C, the contact resistance is usually larger than 5 mOhm. The amount of oxide can be reduced by a lower furnace temperature and/or shorter dwell times in the furnace but this will seriously affect the robustness of the hot forming process. Low furnace temperatures make the material susceptible to ferrite formation which will decrease the final material strength. A short dwell time minimizes the flexibility of the process, since sometimes the samples have to remain in the furnace for a longer time period due to technical issues at the pressing station behind the furnace.

It is the opinion of the inventors that the amount of oxide should be lowered - without lowering the furnace temperature or shortening the maximum furnace dwell time - in order to maintain a very robust hot forming process. Therefore they investigated several post-treatments i.e. treatments resulting in several metal-phosphate layers that would minimize the total amount of oxidation at comparable heating cycles.

Several types of metal-phosphates were chosen for investigations. In one set of experiments the performance of two types of metal-phosphates was investigated. Phosphate-1 was a no-rinse ZnMg phosphate and phosphate-2 was a no-rinse ZnNiMn phosphate. Both types of phosphate (typically Granodine® 5895 en 5893 respectively) were applied as a wet acidic phosphate solution film with a thickness of 3 - 4 ml/m² using a phosphate concentration of 120 g/l after which the film was dried in an oven. The substrates were 22MnB5 steel sheets coated with a zinc coating in which 1.6 weight % Al and 1.6 weight % Mg was present.

Table 1 below shows the results the inventors obtained for different post-treatments after a heat cycle of 6 min in a chamber furnace heated to 880°C. The weldability was evaluated on the basis of measurement of the contact resistance described in DVS2929:2007 with the exceptions that a 7.5kN force and 300mm electrode radius were used. It will be clear that a phosphate-1 layer in fact deteriorates the contact resistance of the sheet as compared to a sheet without phosphate layer; the amount of zinc-oxide reduces slightly when using phosphate-1. Even an oil layer performs better than phosphate-1. However, the sheet with phosphate-2 layer provides a contact resistance that is very much improved as compared to a sheet without phosphate layer, and the contact resistance is far below 1 mOhm, so the use of a phosphate-2 layer on top of a zinc or zinc alloy coated steel for hot forming provides the weldability that is required for hot formed parts in the automotive industry.

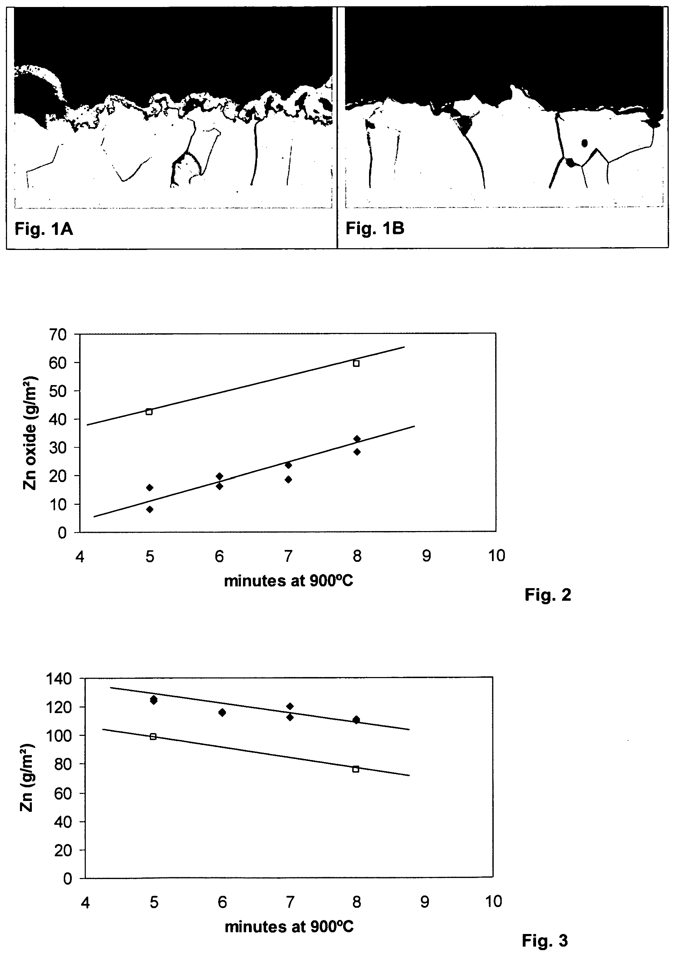

Figure 1 shows the difference between a zinc coated substrate without post-treatment (Fig. 1A) and with a phosphate-2 layer (Fig. 1B). It is clear from the figures that the use of the phosphate layer minimizes the oxide layer formed in the zinc coating due to the heating of the phosphated zinc coated steel.

**Table 1**

| **Post-treatment** | **Contact resistance** | **Amount of ZnO** |
|---|---|---|
| | [mOhm] | [g/m2] |
| none | 21.8 | 68 |
| oil | 15.1 | n.a. |
| phosphate-1 | 58.6 | 51 |
| phosphate-2 | 0.15 | 6.9 |

The Figures 2 and 3 illustrate the difference in amount of ZnO and Zn (available for corrosion protection) when heated during 5, 6, 7 and 8 minutes in a chamber furnace heated to 900°C.

Fig. 2 shows the increase in zinc-oxide when the sheets are heated for a longer time. The open markers give values for sheets without a phosphate -2 layer; the closed markers give values for sheets with a phosphate-2 layer. There is a difference of about 30 g/m² zinc-oxide between the zinc layer without and with a phosphate-2 layer.

Fig 3 shows the resulting amount of metallic zinc that remains in the sheets. For the sheets with the phosphate-2 layer more metallic zinc stays on the sheets.

The resulting contact resistance is given in Table 2. It is clear from these results that even for long dwell times of approximately 8 minutes the contact resistance of a sheet with a phosphate-2 layer remains under 1 mOhm, so this is still acceptable for the automotive industry.

**Table 2**

| **Post-treatment** | **Dwell time** | **Contact Resistance** |
|---|---|---|
| | **[min]** | **[mOhm]** |
| none | 5 | 3.5 |
| phosphate-2 | 5 | 0.3 |
| phosphate-2 | 6 | 0.3 |
| phosphate-2 | 7 | 0.6 |
| phosphate-2 | 8 | 0.8 |
| none | 8 | 8 |

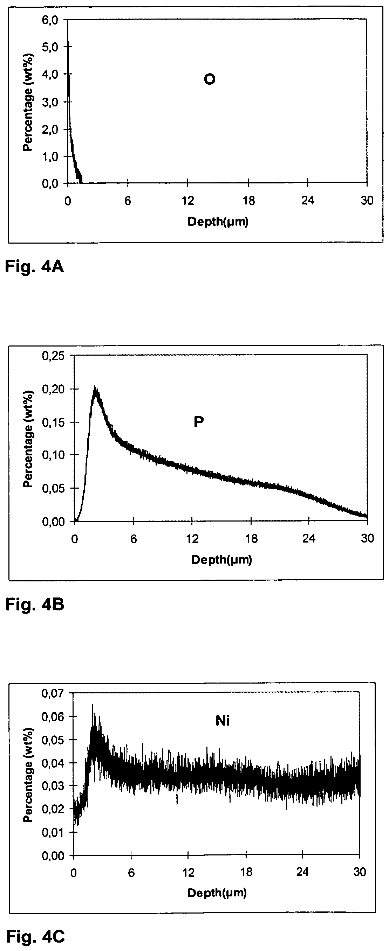

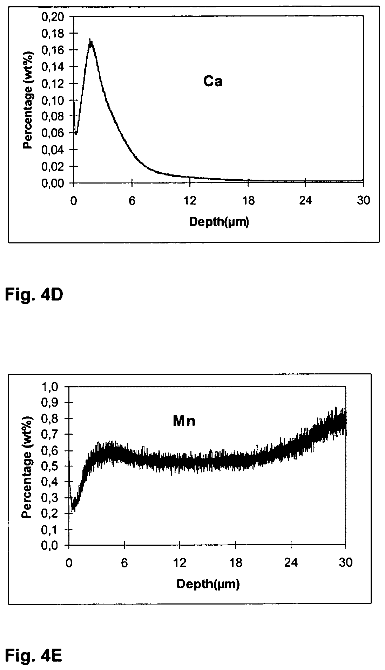

Figure 4 shows the amount of oxygen as a measure for the oxide thickness and the amount of phosphorus, nickel, manganese and calcium in the phosphate-2 layer after heating. Zinc is not shown. It is clear that the commercial ZnNiMn phosphate also contains some calcium. It is expected that the calcium in the phosphate contributes to a reduction of the zinc oxide formation, which improves the weldability.

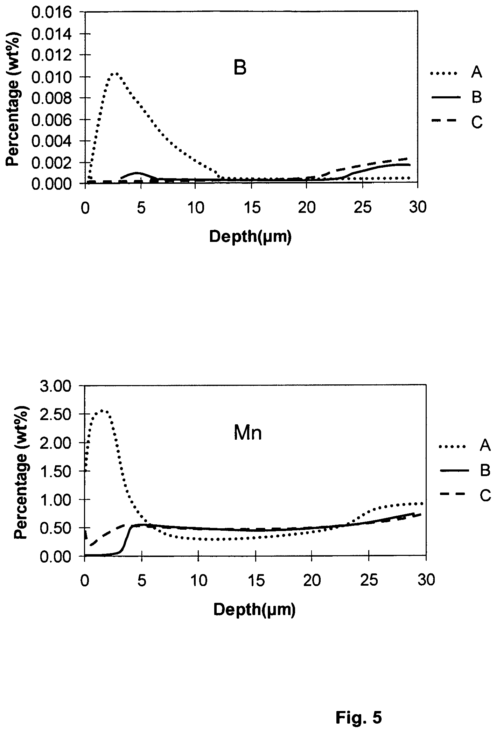

Fig.5 shows different lines for the amount of B and Mn in the coating after hot forming, wherein dotted lines A indicate a coating without phosphate layer, lines B with a phosphate-1 layer and dashed lines C with a phosphate-2 layer. From these diagrams it is clear that the applied metal-phosphate layer reduces diffusion of B and Mn from the substrate into the corrosion protective coating. The result of this reduced diffusion of B and Mn is a better hardenability of the substrate.

In a further set of experiments sample steel sheets were hot formed and tested with the results indicated in Table 3.

In Table 3 MP is the kind of metal-phosphate, CW the phosphate coating weight (dry) in g/m², CWW the phosphate coating weight (wet film) in ml/m², FT the temperature in °C in the air furnace, FTT the dwell time in the furnace in minutes, CR the contact resistance in mOhm, measured according to the method described above, Zn in Zn-Fe the amount of metallic Zn that remains in the sheets as referred to above, Zn in oxide the amount of Zn oxide as referred to above. In column MP, the term "+Mn" and the term "+Ca" means that these phosphates were obtained using metal-phosphate solutions containing additional amounts of the indicated elements as compared to the amounts typically used.

According to an aspect of the invention for the purpose of further processing of the hot formed product for instance but not limited to for automotive applications, it is preferred that the Zn in Zn-Fe is above 130 g/m² and/or the Zn in oxide is below 25 g/m², more preferably below 10 g/m².

**Table 3**

| MP | CW | CWW | FT Air | FTT | CR | Zn in ZnFe | Zn in oxide |
|---|---|---|---|---|---|---|---|
| | g/m² | ml/m² | °C | min | mOhm | g/m² | g/m² |
| none | 0 | 0 | 900 | 5 | 6.69 | n.a. | n.a. |
| none | 0 | 0 | 900 | 8 | 35.67 | n.a. | n.a. |
| ZnNiMn | 0.5 | >5 | 900 | 5 | 6.00 | 116 | 36 |
| ZnNiMn | 0.5 | >5 | 900 | 8 | 49.30 | 101 | 52 |
| ZnNiMn | 0.5 | >5 | 920 | 5 | 7.72 | 105 | 36 |
| ZnNiMn | 0.5 | >5 | 920 | 8 | 28.69 | 99 | 47 |
| ZnNiMn | 1.0 | >5 | 900 | 5 | 3.90 | 124 | 23 |
| ZnNiMn | 1.0 | >5 | 900 | 8 | 18.58 | 112 | 42 |
| ZnNiMn | 1.0 | >5 | 920 | 5 | 0.75 | 139 | 10 |
| ZnNiMn | 1.0 | >5 | 920 | 8 | 22.50 | 126 | 28 |
| ZnNiMn | 1.7 | >5 | 900 | 5 | 0.10 | 154 | 3 |
| ZnNiMn | 1.7 | >5 | 900 | 8 | 0.41 | 133 | 24 |
| ZnNiMn | 1.7 | >5 | 920 | 5 | 0.28 | 142 | 6 |
| ZnNiMn | 1.7 | >5 | 920 | 8 | 0.66 | 138 | 5 |
| ZnNiMn | 2.8 | >5 | 900 | 5 | 0.31 | n.a. | n.a. |
| ZnNiMn | 2.8 | >5 | 900 | 8 | 0.47 | n.a. | n.a. |
| ZnNiMn | 2.0 | >5 | 900 | 6 | 0.17 | n.a. | n.a. |
| ZnNiMn | 2.0 | >5 | 900 | 6 | 0.07 | n.a. | n.a. |
| ZnMn | 2.1 | >5 | 900 | 6 | 0.30 | n.a. | n.a. |
| ZnMn | 2.1 | >5 | 900 | 6 | 0.17 | n.a. | n.a. |
| ZnMn+Mn | 2.1 | >5 | 900 | 6 | 0.80 | n.a. | n.a. |
| ZnMn+Mn | 2.1 | >5 | 900 | 6 | 0.34 | n.a. | n.a. |
| ZnMn+Mn | 2.1 | >5 | 900 | 8 | 3.00 | n.a. | n.a. |
| ZnMn+Ca | 1.9 | >5 | 900 | 6 | 0.17 | n.a. | n.a. |
| ZnMn+Ca | 1.9 | >5 | 900 | 8 | 0.44 | n.a. | n.a. |
| Zn+Ca | 2.1 | >5 | 900 | 6 | 0.07 | n.a. | n.a. |
| Zn+Ca | 2.1 | >5 | 900 | 8 | 0.07 | n.a. | n.a. |
| ZnNiMn | 2.3 | 2 - 3 | 900 | 6 | 0.20 | 134 | 3 |
| ZnNiMn | 2.3 | 2 - 3 | 900 | 6 | 0.14 | 135 | 3 |
| ZnNiMn | 2.3 | 2 - 3 | 900 | 6 | 0.10 | 136 | 3 |
| ZnNiMn | 2.3 | 2 - 3 | 900 | 6 | 0.10 | 136 | 3 |
| ZnNiMn | 2.3 | 2 - 3 | 900 | 8 | 0.23 | 138 | 3 |

## Claims

1. Hot formed product made from a hot formable strip, sheet or blank which is formable at a temperature of 600° C or above, the strip, sheet or blank comprising a substrate of hot formable steel having a composition in weight percent:
C between 0.04 and 0.5 %
Mn between 0.5 and 3.5 %
Si less than 2.0 %
Cr less than 1.0 %
Ti less than 0.2 %
Al less than 2.0 %
Mo less than 0.5 %
P less than 0.1 %
N less than 0.015 %
S less than 0.05 %
B less than 0.015 %
the remainder being Fe and unavoidable impurities.
the substrate being coated with a corrosion protective coating being a zinc or zinc alloy layer, **characterised in that** the coated steel substrate before the hot forming is covered by a metal-phosphate layer containing the element zinc and calcium and optionally at least one element of manganese and nickel.

2. Hot formed product according to claim 1, wherein the element zinc in the metal-phosphate layer has a share of at least 20 % in the metallic elements in the metal-phosphate layer, preferably a share of at least 50 %, more preferably at least 80 %.

3. Hot formed product according to claim 1 or 2, wherein the metal-phosphate layer contains calcium as a separate metal phosphate layer whereby the metal is both zinc and calcium together with ZnMn phosphate as a base metal-phosphate.

4. Hot formed product according to claim 1 or 2, wherein the metal-phosphate layer contains calcium as a separate metal phosphate layer whereby the metal is both zinc and calcium together with ZnNiMn phosphate as a base metal-phosphate.

5. Hot formed product according to any one of the preceding claims, wherein the thickness of the metal-phosphate layer is at most 5 g/m², preferably between 0.1 and 3.0 g/m², more preferably between 0.2 and 2.5 g/m², more preferably between 1.0 and 2.5 g/m².

6. Hot formed product according to any one of the preceding claims, wherein the zinc or zinc alloy layer is a galvannealed layer containing Fe up to 70 weight %, preferably containing Fe up to 40 weight %, more preferably containing Fe up to 20 weight %, still more preferably containing Fe up to 10 weight %.

7. Hot formed product according to any one of the preceding claims, wherein the zinc alloy layer consists of 0.3 to 2.3 weight % magnesium and 0.6 to 2.3 weight % aluminium, optionally less than 0.2 weight % of one or more additional elements, the remainder being zinc and unavoidable impurities.

8. Hot formed product according to any one of the preceding claims, wherein the corrosion protective coating has a thickness of 2 to 25 µm.

9. Hot formed product according to any one of the preceding claims, wherein the hot formable steel substrate is a steel substrate, having a composition in weight percent:
C between 0.04 and 0.5 %
Mn between 0.5 and 3.5 %
Si less than 2.0 %
Cr less than 1.0 %
Ti less than 0.2 %
Al less than 2.0 %
Mo less than 0.5 %
P less than 0.1 %
Nb less than 0.1 %
N less than 0.015 %
S less than 0.05 %
B less than 0.015 %
the remainder being Fe and unavoidable impurities.

10. Hot formed product according to any one of the preceding claims, wherein the hot formable steel substrate is a steel substrate, having a composition in weight percent:
C between 0.04 and 0.5 %
Mn between 0.5 and 3.5 %
Si less than 2.0 %
Cr less than 1.0 %
Ti less than 0.2 %
Al less than 2.0 %
Mo less than 0.5 %
P less than 0.1 %
N less than 0.015 %
S less than 0.05 %
B less than 0.015 %
W less than 0.3 %
the remainder being Fe and unavoidable impurities.

11. Hot formed product according to any one of the preceding claims, wherein the steel substrate has a thickness between 0.5 and 3.0 mm.

12. Hot formed product according to any one of the preceding claims, wherein the steel substrate is hot formable at Ac1-temperature or above.

13. Hot formed product according to any one of the preceding claims, wherein the coated hot formed substrate has a contact resistance below 1 mOhm.

14. Hot formed product according to any one of the preceding claims, wherein the composition of the steel substrate of the hot formed product is essentially the same as the composition of the steel substrate before the hot forming.

15. Method for hot forming the hot formed product according to any one of the claims 1 - 14, wherein the substrate of hot formable steel coated with the corrosion protective coating being a zinc or zinc alloy layer is covered by a metal-phosphate solution containing the element zinc and calcium and optionally at least one element of manganese and nickel, wherein the sheet or blank or a pre-form formed out of the sheet or blank is heated to the Ac1-temperature or above, the sheet or blank or pre-form is hot formed in a hot forming die, and the hot formed product is quenched.

16. Process for producing the hot formable strip, sheet or blank according to any of the claims 1-14, wherein the substrate of hot formable steel coated with the corrosion protective coating is covered by a metal-phosphate solution containing the element zinc and calcium and optionally at least one element of manganese and nickel, whereafter the strip, sheet or blank is heated to remove any excess of water and complete the formation of the metal-phosphate layer.

17. Method according to claim 16, wherein the metal-phosphate solution is applied on the coated steel strip, sheet or blank as a wet film having a thickness of 1 to 10 ml/m2 by spraying or dipping and subsequently squeezing or by roll coating or by rinsing optionally followed by gas wiping, preferably at the end of a coating line, and the wet film is dried at a temperature of between 70°C and 90°C.

## Patentansprüche

1. Warmgeformtes Produkt, hergestellt aus einem warmformbaren Streifen, Blech oder Rohling, der/das bei einer Temperatur von 600 °C oder darüber formbar ist, wobei der Streifen, das Blech oder der Rohling ein Substrat aus warmformbarem Stahl umfasst, das eine Zusammensetzung in Gewichtsprozent aufweist:
C zwischen 0,04 und 0,5 %
Mn zwischen 0,5 und 3,5 %
Si weniger als 2,0 %
Cr weniger als 1,0 %
Ti weniger als 0,2 %
Al weniger als 2,0 %
Mo weniger als 0,5 %
P weniger als 0,1 %
N weniger als 0,015 %
S weniger als 0,05 %
B weniger als 0,015 %
wobei der Rest Fe und unvermeidbare Verunreinigungen sind,
wobei das Substrat mit einer Korrosionsschutzbeschichtung beschichtet ist, die eine Zink- oder Zinklegierungsschicht ist, **dadurch gekennzeichnet, dass** das beschichtete Stahlsubstrat vor dem Warmformen mit einer Metallphosphatschicht bedeckt wird, die das Element Zink und Calcium und optional wenigstens ein Element Mangan und Nickel enthält.

2. Warmgeformtes Produkt nach Anspruch 1, wobei das Element Zink in der Metallphosphatschicht einen Anteil von wenigstens 20 % in den Metallelementen in der Metallphosphatschicht aufweist, vorzugsweise einen Anteil von wenigstens 50 %, stärker bevorzugt wenigstens 80 %.

3. Warmgeformtes Produkt nach Anspruch 1 oder 2, wobei die Metallphosphatschicht Calcium als eine separate Metallphosphatschicht enthält, wodurch das Metall sowohl Zink als auch Calcium zusammen mit ZnMn-Phosphat als ein Grundmetallphosphat ist.

4. Warmgeformtes Produkt nach Anspruch 1 oder 2, wobei die Metallphosphatschicht Calcium als eine separate Metallphosphatschicht enthält, wodurch das Metall sowohl Zink als auch Calcium zusammen mit ZnNiMn-Phosphat als ein Grundmetallphosphat ist.

5. Warmgeformtes Produkt nach einem der vorhergehenden Ansprüche, wobei die Dicke der Metallphosphatschicht höchstens 5 g/m², vorzugsweise zwischen 0,1 und 3,0 g/m², stärker bevorzugt zwischen 0,2 und 2,5 g/m², stärker bevorzugt zwischen 1,0 und 2,5 g/m² beträgt.

6. Warmgeformtes Produkt nach einem der vorhergehenden Ansprüche, wobei die Zink oder Zinklegierungsschicht eine verzinkte Schicht ist, die Fe bis zu 70 Gew.-% enthält, vorzugsweise Fe bis zu 40 Gew.-% enthält, stärker bevorzugt Fe bis zu 20 Gew.-% enthält, noch stärker bevorzugt Fe bis zu 10 Gew.-% enthält.

7. Warmgeformtes Produkt nach einem der vorhergehenden Ansprüche, wobei die Zinklegierungsschicht aus 0,3 bis 2,3 Gew.-% Magnesium und 0,6 bis 2,3 Gew.-% Aluminium, optional weniger als 0,2 Gew.-% eines oder mehrerer zusätzlicher Elemente besteht, wobei der Rest Zink und unvermeidbare Verunreinigungen ist.

8. Warmgeformtes Produkt nach einem der vorhergehenden Ansprüche, wobei die Korrosionsschutzbeschichtung eine Dicke von 2 bis 25 µm aufweist.

9. Warmgeformtes Produkt nach einem der vorhergehenden Ansprüche, wobei das warmformbare Stahlsubstrat ein Stahlsubstrat ist, das eine Zusammensetzung in Gewichtsprozent aufweist:
C zwischen 0,04 und 0,5 %
Mn zwischen 0,5 und 3,5 %
Si weniger als 2,0 %
Cr weniger als 1,0 %
Ti weniger als 0,2 %
Al weniger als 2,0 %
Mo weniger als 0,5 %
P weniger als 0,1 %
Nb weniger als 0,1 %
N weniger als 0,015 %
S weniger als 0,05 %
B weniger als 0,015 %
wobei der Rest Fe und unvermeidbare Verunreinigungen sind.

10. Warmgeformtes Produkt nach einem der vorhergehenden Ansprüche, wobei das warmformbare Stahlsubstrat ein Stahlsubstrat ist, das eine Zusammensetzung in Gewichtsprozent aufweist:
C zwischen 0,04 und 0,5 %
Mn zwischen 0,5 und 3,5 %
Si weniger als 2,0 %
Cr weniger als 1,0 %
Ti weniger als 0,2 %
Al weniger als 2,0 %
Mo weniger als 0,5 %
P weniger als 0,1 %
N weniger als 0,015 %
S weniger als 0,05 %
B weniger als 0,015 %
W weniger als 0,3 %
wobei der Rest Fe und unvermeidbare Verunreinigungen sind.

11. Warmgeformtes Produkt nach einem der vorhergehenden Ansprüche, wobei das Stahlsubstrat eine Dicke zwischen 0,5 und 3,0 mm aufweist.

12. Warmgeformtes Produkt nach einem der vorhergehenden Ansprüche, wobei das Stahlsubstrat bei Ac1-Temperatur oder darüber warmformbar ist.

13. Warmgeformtes Produkt nach einem der vorhergehenden Ansprüche, wobei das beschichtete warmgeformte Substrat einen Kontaktwiderstand unter 1 mOhm aufweist.

14. Warmgeformtes Produkt nach einem der vorhergehenden Ansprüche, wobei die Zusammensetzung des Stahlsubstrats des warmgeformten Produkts im Wesentlichen der Zusammensetzung des Stahlsubstrats vor dem Warmformen entspricht.

15. Verfahren zum Warmformen des warmgeformten Produkts nach einem der Ansprüche 1 bis 14, wobei das Substrat aus warmformbaren Stahl, das mit einer Korrosionsschutzbeschichtung, die eine Zink- oder Zinklegierungsschicht ist, mit einer Metallphosphatlösung, die das Element Zink und Calcium und optional wenigstens ein Element Mangan oder Nickel enthält, bedeckt ist, wobei das Blech oder der Rohling oder eine Vorform, die aus dem Blech oder dem Rohling ausgebildet wird, auf eine Ac1-Temperatur oder darüber erhitzt wird, das Blech oder der Rohling oder die Vorform in einer Warmformpressform warmgeformt wird und das warmgeformte Produkt abgeschreckt wird.

16. Vorgang zum Herstellen des warmformbaren Streifens, Blechs oder Rohlings nach einem der Ansprüche 1 bis 14, wobei das mit der Korrosionsschutzbeschichtung beschichtete Substrat aus warmformbarem Stahl mit einer Metallphosphatlösung bedeckt wird, die das Element Zink und Calcium und optional wenigstens ein Element Mangan und Nickel enthält, wonach der Streifen, das Blech oder der Rohling erhitzt wird, um jegliches überschüssiges Wasser zu entfernen und die Ausbildung der Metallphosphatschicht zu vervollständigen.

17. Verfahren nach Anspruch 16, wobei die Metallphosphatlösung auf den/das beschichtete Stahlstreifen, -blech oder -rohling als ein Nassfilm mit einer Dicke von 1 bis 10 ml/m2 durch ein Aufsprühen oder ein Eintauchen und ein anschließendes Auspressen oder ein Walzbeschichten oder ein Spülen, optional gefolgt von einem Abwischen mit Gas, vorzugsweise an dem Ende einer Beschichtungslinie, und ein Trocknen des Nassfilms bei einer Temperatur zwischen 70 °C und 90 °C.

## Revendications

1. Produit formé à chaud fabriqué à partir d'une bande, feuille ou ébauche thermoformable qui est formable à une température supérieure ou égale à 600 °C, la bande, feuille ou ébauche comprenant un substrat d'acier thermoformable ayant une composition en pourcentage en poids :
C entre 0,04 et 0,5 %
Mn entre 0,5 et 3,5 %
Si moins de 2,0 %
Cr moins de 1,0 %
Ti moins de 0,2 %
Al moins de 2,0 %
Mo moins de 0,5 %
P moins de 0,1 %
N moins de 0,015 %
S moins de 0,05 %
B moins de 0,015 %
le reste étant du Fe et des impuretés inévitables,
le substrat étant enduit d'un revêtement anticorrosif qui est une couche de zinc ou à base d'un alliage de zinc, **caractérisé en ce que** le substrat en acier revêtu avant le formage à chaud est recouvert d'une couche de phosphate de métal contenant du zinc et du calcium élémentaires et éventuellement au moins un élément parmi le manganèse et le nickel.

2. Produit formé à chaud selon la revendication 1, dans lequel l'élément zinc dans la couche de phosphate de métal a une part d'au moins 20 % dans les éléments métalliques dans la couche de phosphate de métal, de préférence une part d'au moins 50 %, plus préférablement d'au moins 80%.

3. Produit formé à chaud selon la revendication 1 ou la revendication 2, dans lequel la couche de phosphate de métal contient du calcium en tant que couche de phosphate de métal séparée selon laquelle le métal est à la fois le zinc et le calcium conjointement au phosphate de ZnMn en tant que phosphate de métal de base.

4. Produit formé à chaud selon la revendication 1 ou la revendication 2, dans lequel la couche de phosphate de métal contient du calcium en tant que couche de phosphate de métal séparée selon laquelle le métal est à la fois le zinc et le calcium conjointement au phosphate de ZnNiMn en tant que phosphate de métal de base.

5. Produit formé à chaud selon l'une quelconque des revendications précédentes, dans lequel l'épaisseur de la couche de phosphate de métal est d'au plus 5 g/m², de préférence comprise entre 0,1 et 3,0 g/m², plus préférablement comprise entre 0,2 et 2,5 g/m², plus préférablement comprise entre 1,0 et 2,5 g/m².

6. Produit formé à chaud selon l'une quelconque des revendications précédentes, dans lequel la couche de zinc ou à base d'un alliage de zinc est une couche recuite par galvanisation contenant du Fe jusqu'à 70 % en poids, de préférence contenant du Fe jusqu'à 40 % en poids, plus préférablement contenant du Fe jusqu'à 20 % en poids, encore plus préférablement contenant du Fe jusqu'à 10 % en poids.

7. Produit formé à chaud selon l'une quelconque des revendications précédentes, dans lequel la couche à base d'alliage de zinc est constituée entre 0,3 et 2,3 % en poids de magnésium et entre 0,6 et 2,3 % en poids d'aluminium, éventuellement de moins de 0,2 % en poids d'au moins un élément supplémentaire, le reste étant du zinc et des impuretés inévitables.

8. Produit formé à chaud selon l'une quelconque des revendications précédentes, dans lequel le revêtement anticorrosif a une épaisseur comprise entre 2 et 25 µm.

9. Produit formé à chaud selon l'une quelconque des revendications précédentes, dans lequel le substrat en acier thermoformable est un substrat en acier ayant une composition en pourcentage en poids :
C entre 0,04 et 0,5 %
Mn entre 0,5 et 3,5 %
Si moins de 2,0 %
Cr moins de 1,0 %
Ti moins de 0,2 %
Al moins de 2,0 %
Mo moins de 0,5 %
P moins de 0,1 %
Nb moins de 0,1 %
N moins de 0,015 %
S moins de 0,05 %
B moins de 0,015 % le reste étant du Fe et des impuretés inévitables.

10. Produit formé à chaud selon l'une quelconque des revendications précédentes, dans lequel le substrat en acier thermoformable est un substrat en acier ayant une composition en pourcentage en poids :
C entre 0,04 et 0,5 %
Mn entre 0,5 et 3,5 %
Si moins de 2,0 %
Cr moins de 1,0 %
Ti moins de 0,2 %
Al moins de 2,0 %
Mo moins de 0,5 %
P moins de 0,1 %
N moins de 0,015 %
S moins de 0,05 %
B moins de 0,015 %
W moins de 0,3 %
le reste étant du Fe et des impuretés inévitables.

11. Produit formé à chaud selon l'une quelconque des revendications précédentes, dans lequel le substrat en acier a une épaisseur comprise entre 0,5 et 3,0 mm.

12. Produit formé à chaud selon l'une quelconque des revendications précédentes, dans lequel le substrat en acier est thermoformable à une température supérieure ou égale à Ac1.

13. Produit formé à chaud selon l'une quelconque des revendications précédentes, dans lequel le substrat formé à chaud enduit a une résistance de contact inférieure à 1 mOhm.

14. Produit formé à chaud selon l'une quelconque des revendications précédentes, dans lequel la composition du substrat en acier du produit formé à chaud est sensiblement la même que la composition du substrat en acier avant le formage à chaud.

15. Procédé de formage à chaud du produit formé à chaud selon l'une quelconque des revendications 1 à 14, dans lequel le substrat en acier thermoformable enduit du revêtement anticorrosif étant une couche de zinc ou à base d'un alliage de zinc est recouvert d'une solution de phosphate de métal contenant du zinc et du calcium élémentaires et éventuellement au moins un élément parmi le manganèse et le nickel, dans lequel la feuille ou l'ébauche ou une préforme constituée de la feuille ou de l'ébauche est chauffée à une température supérieure ou égale à Ac1, la feuille ou l'ébauche ou la préforme est formée à chaud dans une matrice de formage à chaud, et le produit formé à chaud subit une trempe.

16. Procédé de production de la bande, feuille ou ébauche thermoformable selon l'une quelconque des revendications 1 à 14, dans lequel le substrat en acier thermoformable enduit du revêtement anticorrosif est recouvert d'une solution de phosphate de métal contenant du zinc et du calcium élémentaires et éventuellement au moins un élément parmi le manganèse et le nickel, après quoi la bande, feuille ou ébauche est chauffée afin d'éliminer tout excès d'eau et de compléter la formation de la couche de phosphate de métal.

17. Procédé selon la revendication 16, dans lequel la solution de phosphate de métal est appliquée sur la bande, feuille ou ébauche en acier enduit comme un film humide ayant une épaisseur comprise entre 1 et 10 ml/m² par pulvérisation ou par trempage et par la suite par compression ou par revêtement au rouleau ou par rinçage éventuellement suivi par le nettoyage de gaz, de préférence à la fin d'une ligne de revêtement, et le film humide est séché à une température comprise entre 70 °C et 90 °C.
